# EUROPÄISCHE PATENTSCHRIFT

(11) **EP 3 959 448 B1**
(45) Veröffentlichungstag und Bekanntmachung des Hinweises auf die Patenterteilung: **02.08.2023**
(21) Anmeldenummer: 20723803.1
(22) Anmeldetag: 23.04.2020
(51) Int. Cl.: F16B 13/00

(54) **ANORDNUNG MIT WENIGSTENS EINEM ABSCHNITT EINES BAUWERKS UND VERFAHREN ZUM BESTIMMEN EINES ZUSTANDS WENIGSTENS EINES ABSCHNITTS EINES BAUWERKS**
ASSEMBLY COMPRISING AT LEAST ONE SECTION OF A STRUCTURE AND METHOD FOR DETERMINING A STATUS OF AT LEAST ONE SECTION OF A STRUCTURE
DISPOSITIF COMPRENANT AU MOINS UNE SECTION D'UN BÂTIMENT ET PROCÉDÉ POUR LA DÉTERMINATION D'UN ÉTAT D'AU MOINS UNE SECTION D'UN BÂTIMENT

(30) Priorität: 24.04.2019 DE 102019205835
(43) Veröffentlichungstag der Anmeldung: 02.03.2022
(73) Patentinhaber: Adolf Würth GmbH & Co. KG, 74653 Künzelsau (DE); Würth International AG, 7000 Chur (CH)
(72) Erfinder: KÜENZLEN, Jürgen, 71570 Oppenweiler (DE)
(74) Vertreter: Patentanwälte Ruff, Wilhelm, Beier, Dauster & Partner mbB
(86) Internationale Anmeldenummer: PCT/EP2020/061267
(87) Internationale Veröffentlichungsnummer: WO 2020/216815

(56) Entgegenhaltungen:
- EP-A1- 3 339 663
- DE-A1-102010 001 144

## Beschreibung

Die Erfindung betrifft eine Anordnung mit wenigstens einem Abschnitt eines Bauwerks und wenigstens einem in dem Abschnitt des Bauwerks angeordneten Befestigungselement. Die Erfindung betrifft auch ein Verfahren zum Bestimmen eines Zustands wenigstens eines Abschnitts eines Bauwerks und/oder eines Befestigungselements mit einer erfindungsgemäßen Anordnung.

Mit der Erfindung soll eine Überwachung von Bauwerken und/oder eines Befestigungselements hinsichtlich deren Zustand verbessert werden.

Aus der europäischen Offenlegungsschrift EP 3 339 663 A1 ist eine Unterlegscheibe für einen Betonanker bekannt, wobei die Unterlegscheibe mit einem RFID-Transceiver sowie Sensoren und Speichereinrichtungen versehen sein kann. Der Transponder in der Unterlegscheibe kann ein elektrisches Signal von einem Zugspannungssensor erhalten. Der RFID-Transceiver in der Unterlegscheibe ist in der Lage, Daten drahtlos zu einer Empfangseinheit an einem entfernten Ort zu übertragen. Die Empfangseinheit kann BIM-Daten und/oder Grafiken enthalten. Es kann der tatsächliche BIM-Ort oder die Identität von Befestigungselementen mit entsprechenden Unterlegscheiben angezeigt werden.

Aus der deutschen Offenlegungsschrift DE 10 2010 001 144 A1 ist ein mechanisches Verbindungsbauteil und ein Verfahren zur drahtlosen Erfassung einer mechanischen Belastung des Verbindungsbauteils bekannt. Das Verbindungsbauteil weist an einer Oberfläche eine Sensorschicht auf, die in Abhängigkeit einer auf das Verbindungsbauteil wirkenden Kraft eine elektrisch auslesbare Eigenschaft ändert. An dem Verbindungsbauteil ist eine drahtlose Schnittstelle vorgesehen, die eine drahtlose Erfassung einer mechanischen Belastung des Verbindungsbauteils ermöglicht.

Erfindungsgemäß ist hierzu eine Anordnung mit den Merkmalen von Anspruch 1 und ein Verfahren mit den Merkmalen von Anspruch 7 vorgesehen. Vorteilhafte Weiterbildungen der Erfindung sind in den Unteransprüchen angegeben.

Es ist eine Anordnung mit wenigstens einem Abschnitt eines Bauwerks und wenigstens einem in dem Abschnitt des Bauwerks angeordneten Befestigungselement vorgesehen, bei der ein Computer und ein auf dem Computer gespeichertes Datenmodell des Abschnitts des Bauwerks vorgesehen sind, wobei in dem Datenmodell wenigstens Informationen betreffend eine Position des Befestigungselements relativ zu dem Abschnitt des Bauwerks enthalten sind und bei dem das Befestigungselement wenigstens einen Sensor und wenigstens einen auslesbaren Datenspeicher aufweist und bei dem Mittel vorgesehen sind, um den Datenspeicher des Befestigungselements auszulesen und die ausgelesenen Daten in das Datenmodell des Abschnitts des Bauwerks einzulesen.

Indem ein Sensor und wenigstens ein auslesbarer Datenspeicher an dem Befestigungselement bei der erfindungsgemäßen Anordnung mit einem Datenmodell eines Bauwerks, eines Abschnitts oder mehrere Abschnitte eines Bauwerks kombiniert werden, kann ein Zustand, insbesondere ein mechanischer Zustand eines Bauwerks oder eines Abschnitts eines Bauwerks und/oder eines Befestigungselements wesentlich zuverlässiger beurteilt werden, als dies bisher der Fall ist. Denn mittels wenigstens eines Sensors und eines Datenspeichers an dem Befestigungselement werden Informationen über eine Belastung des Befestigungselements zugänglich, die dann, nach dem Einlesen in das Datenmodell des Bauwerks, eine Aussage über den Zustand, beispielsweise die Sicherheit oder Standfestigkeit, des Bauwerks und/oder den Zustand des Befestigungselements erlauben. Beispielsweise können mit dem Sensor eine Anzahl von Lastwechseln an dem Befestigungselement und/oder eine Gesamtlast an dem Befestigungselement ermittelt werden. Ein solcher Sensor kann beispielsweise als piezoelektrischer Sensor ausgebildet sein. Jedem Befestigungselement ist in der Regel eine maximale Lebensdauer, üblicherweise eine maximale Anzahl an Lastwechseln, zugeordnet. Mittels des Sensors und des Datenmodells kann festgestellt werden, wann die maximale Anzahl an Lastwechseln überschritten ist und, wenn dies der Fall ist, kann das Befestigungselement ausgetauscht werden, um die Sicherheit des Bauwerks und des Befestigungselements weiter zu gewährleisten. Mittels eines Feuchtigkeitssensors kann eine Feuchtigkeit im Bereich des Befestigungselements festgestellt werden. Überschreitet eine Feuchtigkeit am Befestigungselement einen vorgeschriebenen Wert, der in dem Datenmodell des Bauwerks abgelegt ist, können beispielsweise Gegenmaßnahmen getroffen werden, um die Sicherheit des Bauwerks, beispielsweise des Dachs eines Gebäudes oder eines Tunnels, weiter zu gewährleisten. In ähnlicher Weise kann dann, wenn mit dem Sensor eine Temperatur überwacht wird, das Befestigungselement beispielsweise ausgetauscht werden, wenn eine zu hohe Temperatur über einen zu langen Zeitraum erfasst wurde. Eine maximale Belastung sowie die Anzahl der Lastwechsel kann, wie ausgeführt, mit dem wenigstens einen Sensor an dem Befestigungselement erfasst werden und diese Parameter spielen eine große Rolle bei der Beurteilung der Sicherheit von Brücken. Bei einem Tunnel würden beispielsweise Feuchtigkeit, sich daraus ergebende Korrosion, die Anzahl der Lastwechsel oder das Auftreten einer Überlast überwacht. Bei dem Dach eines Gebäudes würden beispielsweise Feuchtigkeit und Temperatur und ein sich daraus ergebender Taupunkt, der wiederum zu Schimmelbildung führen kann, überwacht. Anhand der Feuchtigkeit könnte beispielsweise auch ein Hinweis auf eine eventuell undichte Stelle des Dachs entnommen werden. Bei Fassaden können beispielsweise Feuchtigkeit und Temperatur überwacht werden, um einen Taupunkt und eine eventuelle Schimmelgefahr festzustellen. Bei Fundamenten für Maschinen, Roboter, Stanzen oder Kränen kann die Anzahl der Lastwechsel sowie eine maximale Belastung erfasst werden, um eine Standsicherheit eines Fundaments beziehungsweise der Befestigung einschätzen zu können. Absturzsicherungen, beispielsweise für Fenster oder für die Sicherung von Bauelementen oder Personen, können mittels des Sensors am Befestigungselement daraufhin überwacht werden, ob eine Belastung erfolgt ist oder nicht. Ist eine Belastung erfolgt, kann es beispielsweise erforderlich sein, das Befestigungselement der Absturzsicherung auszutauschen. Ist das Befestigungselement an einer unzugänglichen Stelle eines Bauwerks angeordnet, kann mittels des Sensors beispielsweise festgestellt werden, ob eine Feuchtigkeit am Befestigungselement erhöht ist und daher die Gefahr besteht, dass Wasser eingedrungen ist. Bei der Befestigung von Regalen oder Balkonen an Bauwerken kann mittels des Sensors an dem Befestigungselement festgestellt werden, ob eine maximale Belastung erreicht wurde oder ob noch Lastreserven bestehen. Bei Tiefgaragen kann mittels eines Feuchtesensors am Befestigungselement beispielsweise festgestellt werden, ob in einen Bodenaufbau Feuchtigkeit eingedrungen ist. Das Datenmodell des Bauwerks oder des Abschnitts des Bauwerks und/oder eines Befestigungselements enthält Informationen zum Befestigungselement, beispielsweise dessen Bemessungslast oder Nennlast, dessen Alter und/oder dessen Montageart. Weiter können Informationen zum Hersteller, zur Chargennummer und zum Herstelldatum des Befestigungselements in dem Datenmodell sowie auch zu dem Handwerker, der das Befestigungselement, beispielsweise einen Dübel, gesetzt hat, abgelegt sein. Diese Daten werden zusätzlich zur Position des Befestigungselements relativ zu dem Bauwerk oder dem Abschnitt des Bauwerks abgespeichert. Das Datenmodell kann beispielsweise auch Informationen über die statischen und/oder dynamischen Eigenschaften des Bauwerks bzw. des Abschnitts des Bauwerks und/oder des Befestigungselements enthalten, um anhand der Sensordaten des Befestigungselements eine Gesamtbelastung des Bauwerks oder des Abschnitts des Bauwerks und/oder des Befestigungselements ermitteln zu können. Die Informationen über die Position des Befestigungselements können beispielsweise beim Anbringen des Befestigungselements an das Datenmodell übergeben werden. Dies ist beispielsweise mittels eines Positionssensors am Werkzeug zum Anbringen des Befestigungselements, beispielsweise einer Bohrmaschine, möglich.

Mit der Erfindung wird dadurch in sehr einfacher Weise ermöglicht, einen Zustand, beispielsweise eine mechanische Sicherheit, eines Bauwerks oder eines Abschnitts eines Bauwerks und/oder eines Befestigungselements weitaus zuverlässiger beurteilen zu können, als dies bisher der Fall ist. Dies wird in sehr einfacher Weise dadurch erreicht, dass ohnehin anzubringende Befestigungselemente mit jeweils wenigstens einem Sensor versehen sind und dass die mittels dieses wenigstens einen Sensors ermittelten Daten in ein Datenmodell des Bauwerks, des Abschnitts des Bauwerks und/oder des Befestigungselements eingelesen werden. Gegenüber einer konventionellen Anordnung sind daher lediglich spezielle Befestigungselemente, beispielsweise spezielle Dübel, die mit wenigstens einem Sensor und einem auslesbaren Datenspeicher versehen sind, einzusetzen.

In Weiterbildung der Erfindung ist der Sensor als Temperatursensor, Feuchtesensor, Lastwechselsensor, insbesondere mit Dehnmessstreifen und/oder mit piezoelektrischen Elementen, Längenänderungssensor, insbesondere mit Dehnmessstreifen, Kraftsensor und/oder Zeitsensor ausgebildet.

Gemäß der Erfindung weist das Befestigungselement einen Transponder auf, der mittels elektromagnetischer Wellen aktivierbar und identifizierbar ist, nämlich einen RFID-Chip.

Das Vorsehen eines Transponders an dem Befestigungselement erlaubt das drahtlose Auslesen der in dem auslesbaren Datenspeicher enthaltenen Sensordaten. Dies erleichtert und vereinfacht die erfindungsgemäße Anordnung. Beispielsweise sind RFID-Chips mit sehr kleinen Abmessungen günstig erhältlich und können in sehr vorteilhafter Weise bei der erfindungsgemäßen Anordnung eingesetzt werden. Das Auslesen der Daten kann mittels eines mobilen Lesegeräts erfolgen, beispielsweise im Rahmen regelmäßiger Inspektionen des Bauwerks, oder auch automatisiert mittels fest angeordneter Lesegeräte. Im Falle eines RFID-Chips empfängt dieser von dem Lesegerät ausgesendete elektromagnetische Strahlung. Diese elektromagnetische Strahlung erhält zum einen auszuführende Befehle und kann zum anderen auch für eine Energieversorgung des RFID-Chips genutzt werden. Der RFID-Chip sendet die in seinem Datenspeicher enthaltenen Daten aus, so dass diese von dem Lesegerät empfangen werden können. Über das Lesegerät werden die ausgelesenen Daten dann in das Datenmodell eingelesen. Es ist vorteilhaft, wenn der Transponder mittels elektromagnetischer Wellen auch lokalisierbar ist.

In Weiterbildung der Erfindung ist der Transponder, nämlich der RFID-Chip, ausgebildet, Daten aus dem auslesbaren Datenspeicher des Befestigungselements drahtlos zu senden.

In Weiterbildung der Erfindung sind in dem Datenmodell Informationen betreffend Abmessungen, Material, Lebensdauer, Typ, Herstelldatum, Hersteller, Chargennummer, Bemessungslast, Montagedatum, Montageperson und/oder Montageart des Befestigungselements enthalten.

Anhand solcher Informationen kann mittels der erfassten Sensordaten eine zuverlässige Aussage bezüglich einer mechanischen Sicherheit des Befestigungselements und damit auch einer mechanischen Sicherheit des Bauwerks oder des Abschnitts des Bauwerks getroffen werden. Die Daten zum Montagedatum, zur Montageperson und zur Montageart enthalten Informationen, wann, wie und von wem ein Befestigungselement, beispielsweise ein Dübel, gesetzt wurde. Diese Daten dienen der Dokumentation und können gegebenenfalls zur Klärung von Haftungsfragen herangezogen werden.

In Weiterbildung der Erfindung weist das Befestigungselement einen Dübel und eine in dem Dübel angeordnete Schraube oder einen in dem Dübel angeordneten Bolzen auf.

Beispielsweise ist der Dübel als Metalldübel, Kunststoffdübel oder auch Injektionsdübel ausgebildet. Ein Injektionsdübel wird erst in einem Bohrloch in dem Bauwerk ausgebildet, indem ein verfestigbarer Kunststoff in das Bohrloch eingebracht wird und in diesen Kunststoff, noch im nicht verfestigten Zustand, eine Schraube, eine Gewindestange oder ein Bolzen eingebracht wird.

Gemäß der Erfindung ist der Sensor in ein Kunststoffmaterial des Dübels zumindest abschnittsweise eingebettet.

Gemäß der Erfindung ist der Dübel wenigstens abschnittsweise mittels Einbringen von fließfähigem, verfestigbarem Kunststoffmaterial in einem Bohrloch als sogenannter Injektionsdübel ausgebildet und der Sensor ist in das Bohrloch eingebracht und in das Kunststoffmaterial eingebettet.

Auf diese Weise kann der Sensor in einen sogenannten Injektionsdübel eingebracht werden. Der Sensor kann dabei unmittelbar in das Kunststoffmaterial eingebettet werden oder der Sensor kann auch an einer durchlässigen Buchse, beispielsweise einer Gitterbuchse, angeordnet sein, die dann mittels des verfestigbaren Kunststoffs zusammen mit einer Schraube oder einem Bolzen in dem Bohrloch befestigt wird.

In Weiterbildung der Erfindung weist das Befestigungselement einen elektrischen Energiespeicher auf, insbesondere eine Batterie.

Die Batterie kann beispielsweise wiederaufladbar ausgebildet sein, anstelle einer Batterie kann beispielsweise aber auch ein Kondensator als Energiespeicher vorgesehen sein. Ein sogenanntes Energy Harvesting ist im Rahmen der Erfindung möglich. Beispielsweise ist das Befestigungselement mit einem piezoelektrischen Element versehen. Bei jedem Lastwechsel an dem Befestigungselement wird von dem Piezoelement elektrische Energie erzeugt, die dann in dem Energiespeicher gespeichert werden kann. Allgemein sind im Rahmen der Erfindung auch andere, bekannte Arten der Energiegewinnung oder des Energy Harvesting möglich.

In Weiterbildung der Erfindung ist der elektrische Energiespeicher im montierten Zustand des Dübels austauschbar.

Mittels einer austauschbaren Batterie kann eine permanente Erfassung von Sensordaten erfolgen, beispielsweise bei hochbelasteten und sicherheitsrelevanten Bauwerken oder Abschnitten eines Bauwerks und/oder Befestigungselementen. Wird die Batterie dann in regelmäßigen Abständen ausgetauscht, kann eine durchgehende Überwachung und Erfassung von Sensordaten sichergestellt werden.

Gemäß der Erfindung ist der Sensor auf einen Bolzen oder eine Schraube oder auf einen Dübel aufgeklebt.

Beispielsweise kann der Sensor in einen Schlitz eines Bolzens oder auf eine Abflachung eines Bolzens aufgeklebt sein. In ähnlicher Weise kann der Sensor auch in einen Schlitz in einem Metalldübel oder eine Abflachung eines Metalldübels aufgeklebt sein, beispielsweise bei einem Betonanker.

Es ist auch ein Verfahren zum Bestimmen eines Zustands wenigstens eines Abschnitts eines Bauwerks und/oder eines Befestigungselements mit einer erfindungsgemäßen Anordnung vorgesehen, bei dem die Schritte des Auslesens der Daten aus dem Datenspeicher des Dübels und des Einlesens der Daten in das Datenmodell des wenigstens einen Abschnitts des Bauwerks vorgesehen sind.

In Weiterbildung der Erfindung erfolgt anhand der in das Datenmodell des Bauwerks oder des Abschnitts des Bauwerks eingelesenen Daten das Feststellen eines Zustands des Abschnitts des Bauwerks oder des Bauwerks und/oder des Befestigungselements, wobei der Zustand eine Temperaturverteilung, eine Feuchteverteilung, eine Verteilung mechanischer Kräfte oder Spannungen und/oder eine Aufstellung vorangegangener Lastzyklen des Abschnitts des Bauwerks enthält.

In Weiterbildung der Erfindung ist das Verarbeiten der Daten aus dem Datenspeicher des Dübels in Verbindung mit dem Datenmodell und das Berechnen eines Belastungszustands des wenigstens einen Abschnitts des Bauwerks vorgesehen.

In Weiterbildung der Erfindung enthält der ermittelte Zustand des wenigstens einen Abschnitts des Bauwerks und/oder des Befestigungselements eine noch zu erwartende Restlebensdauer des Befestigungselements und/oder des wenigstens einen Abschnitts des Bauwerks.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang dargestellt oder beschrieben sind. In den Zeichnungen zeigen:
- Fig. 1: eine schematische Darstellung einer erfindungsgemäßen Anordnung,
- Fig. 2: eine schematische, abschnittsweise Darstellung einer weiteren erfindungsgemäßen Anordnung und
- Fig. 3: eine schematische Darstellung einer weiteren erfindungsgemäßen Anordnung.

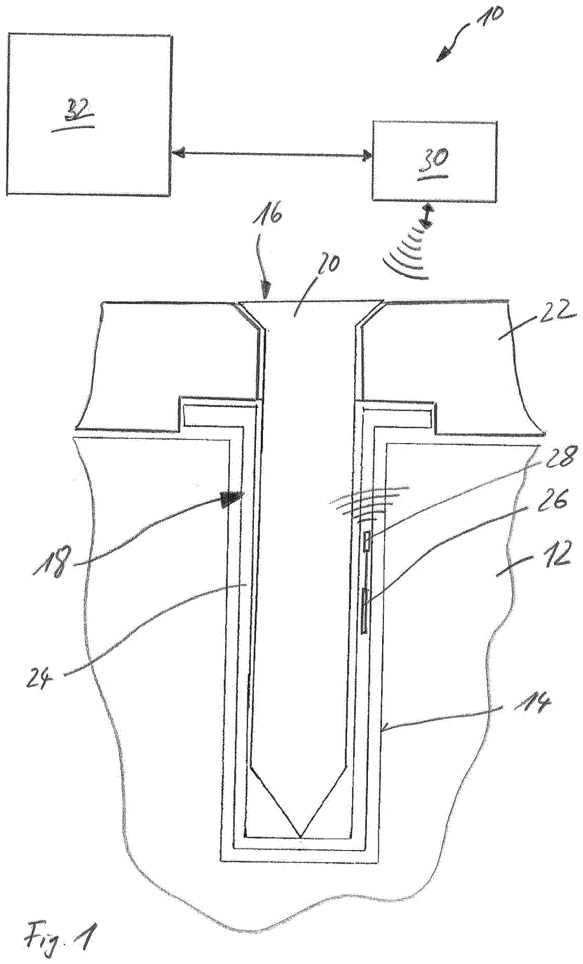

Fig. 1 zeigt eine schematische Darstellung einer erfindungsgemäßen Anordnung 10 gemäß einer ersten Ausführungsform der Erfindung. Die Anordnung 10 weist ein abschnittsweise dargestelltes Bauwerk 12 auf, in dem ein Bohrloch 14 angeordnet ist. In dem Bohrloch ist ein Befestigungselement 16 mit einem Dübel 18 und einer abschnittsweise in dem Dübel 18 angeordneten Schraube 20 vorgesehen. Mit dem Dübel 18 und der Schraube 20 wird ein Gegenstand 22 an dem Bauwerk 12 befestigt. Der Gegenstand 22 kann beispielsweise ein Regal sein, aber auch ein Brückenlager einer Brücke, ein Fassadenelement oder auch ein Fenster.

Die Darstellung der Fig. 1 ist schematisch und zwischen den einzelnen Elementen, beispielsweise zwischen dem Dübel 18 und dem Bauwerk 12 sowie zwischen dem Dübel 18 und der Schraube 20, ist jeweils ein Zwischenraum dargestellt. Dieser Zwischenraum dient lediglich der deutlicheren Erkennbarkeit der einzelnen Elemente in der Fig. 1. In der Realität liegt der Dübel 18 ohne Zwischenraum an der Innenwand des Bohrlochs 14 an und auch die Schraube 20, oder allgemein ein Befestigungsmittel, liegt ohne Zwischenraum an der Innenwand des Dübels 18 an. Auch der Gegenstand 22 wird mittels der Schraube 20 ohne Zwischenraum gegen eine Oberfläche des Bauwerks 12 gepresst.

Der Dübel 18 weist eine zylindrische Hülse 24 auf, die mittels der Schraube 20 wenigstens abschnittsweise aufspreizbar ist. Diese zylindrische Hülse 24 ist durch eine, gegebenenfalls abschnittsweise durchbrochene, Kunststoffwand gebildet. In der Kunststoffwand sind ein Sensor 26 und ein RFID-Chip 28 eingebettet, wobei der Sensor 26 und der RFID-Chip 28 mittels elektrischer Zuleitungen miteinander verbunden sind. Der Sensor 26 ist beispielsweise als Kraftsensor in Form wenigstens eines Dehnmessstreifens ausgebildet. Mit dem Sensor 26 kann somit festgestellt werden, ob eine Kraft in der Wandung der zylindrischen Hülse 24 wirkt. Dies ist bekanntermaßen der Fall, wenn die Schraube 20 angezogen ist und dadurch den Gegenstand 22 gegen die Oberfläche des Bauwerks 12 presst. Mittels des Sensors 26 kann aber selbstverständlich auch erfasst werden, wenn der Gegenstand 22 oder das Bauwerk 12 während des Betriebs belastet werden. Wenn der Gegenstand 22 beispielsweise ein Brückenlager bildet, kann mittels des Sensors 26 festgestellt werden, wenn das Brückenlager 22 belastet wird. Dies ist im Falle einer Brücke immer dann der Fall, wenn ein Fahrzeug über die Brücke fährt oder wenn Windlasten auf die Brücke wirken. Diese Lasten oder Kräfte werden mittels des Sensors 26 erfasst und in einem Datenspeicher des RFID-Chips 28 abgelegt.

Der Sensor 26 kann auch in anderer Weise ausgebildet sein, beispielsweise als Feuchtesensor, Temperatursensor, Längenänderungssensor oder dergleichen, und im Rahmen der Erfindung können mehrere Sensoren 26 unterschiedlicher oder gleicher Art vorgesehen sein. Beispielsweise kann in der Wandung der zylindrischen Hülse 24 des Dübels 18 ein Feuchtesensor, ein Temperatursensor und/oder ein Kraftsensor vorgesehen sein, wobei diese Sensoren alle über elektrische Zuleitungen mit dem RFID-Chip 28 verbunden sind, so dass die mittels der Sensoren 26 erfassten Daten in dem Datenspeicher des RFID-Chips 28 abgelegt werden können.

Die in dem RFID-Chip 28 abgespeicherten Daten können dann mittels eines Lesegeräts 30 drahtlos ausgelesen werden. Hierzu werden von dem Lesegerät 30 elektromagnetische Wellen erzeugt, die von dem RFID-Chip 28 empfangen werden und die auszuführende Befehle enthalten. Gleichzeitig dienen die elektromagnetischen Wellen einer Energieversorgung des RFID-Chips 28. In Reaktion auf die vom Lesegerät 30 erhaltenen Befehle sendet der RFID-Chip 28 die in seinem Datenspeicher enthaltenen Sensordaten und gegebenenfalls weitere Informationen zu dem Befestigungselement 16 an das Lesegerät 30. Diese weiteren Informationen können beispielsweise eine eindeutige Kennnummer des Befestigungselements 16 enthalten. Alternativ oder zusätzlich zu einer eindeutigen Kennung des Befestigungselements 16 können in dem Datenspeicher des RFID-Chips 28 aber auch Informationen zum Befestigungselement 16 enthalten sein, beispielsweise Typ, Hersteller, Herstelldatum, Herstellnummer, Chargennummer, Montageart, Montagedatum, Montageperson oder dergleichen.

Die von dem RFID-Chip 28 an das Lesegerät 30 übertragenen Daten werden dann in ein Datenmodell eingelesen, das auf einem Computer 32 abgespeichert ist. Das Datenmodell auf dem Computer 32 kann beispielsweise als ein Gebäudeinformationssystem ausgebildet sein oder Teil eines Gebäudeinformationssystems bilden und als sogenanntes Bauwerksinformationsmodell (Building Information Model, BIM) ausgebildet sein. Das Datenmodell enthält zumindest Informationen über eine räumliche Position des Befestigungselements 16 relativ zu dem Bauwerk 12 oder einem Abschnitt des Bauwerks 12. Wird mittels des Sensors 26 beispielsweise eine am Sensor 26 auftretende Kraft gemessen, so ist nach dem Einlesen der Sensordaten in das Datenmodell bekannt, an welchem Ort des Bauwerks 12 die von dem Sensor 26 erfasste Kraft wirkt.

Gleiches gilt beispielsweise für eine mittels des Sensors 26 erfasste Temperatur oder Feuchte.

Die in das Datenmodell eingelesenen Sensordaten können ohne weitere Verarbeitung eine Information über das Bauwerk 12 und/oder über das Befestigungselement bereitstellen, beispielsweise eine Feuchtigkeitsverteilung in dem Bauwerk oder an beziehungsweise in dem Befestigungselement 16 oder eine Temperaturverteilung in dem Bauwerk oder an beziehungsweise in dem Befestigungselement 16 oder auch eine Kraftverteilung in dem Bauwerk oder an beziehungsweise in dem Befestigungselement 16.

Die in das Datenmodell eingelesenen Sensordaten können mittels des Computers 32 auch unter Berücksichtigung weiterer Informationen des Gebäudeinformationssystems bzw. des Datenmodells verarbeitet werden. Beispielsweise kann anhand der am Sensor 26 gemessenen Feuchtigkeitswerte oder Temperaturwerte anhand in dem Datenmodell abgelegter Materialeigenschaften des Bauwerks 12 eine Feuchteverteilung oder Temperaturverteilung in dem Bauwerk 12 berechnet werden. In ähnlicher Weise kann anhand mittels des Sensors 26 erfasster Kräfte eine Spannungsverteilung in dem Bauwerk 12 berechnet werden, vorausgesetzt, dass die mechanischen Eigenschaften des Bauwerks 12 in dem Datenmodell abgelegt sind.

Überschreiten die mittels des Sensors 26 ermittelten Sensordaten oder auch die mittels weitergehender Verarbeitung der Sensordaten ermittelten Parameter des Bauwerks 12 vordefinierte Werte, kann eine weitergehende Aussage über den Zustand und/oder die Sicherheit des Bauwerks 12 und/oder eines Befestigungselements getroffen werden. Beispielsweise können dann auch Gegenmaßnahmen getroffen werden. Wird beispielsweise mittels des Dübels 12 eine erhöhte Feuchtigkeit festgestellt, können Abdichtmaßnahmen vorgenommen werden. Wird mittels des Sensors 26 festgestellt, dass die maximale Anzahl an Lastwechseln des Befestigungselements 16, für die das Befestigungselement 16 ausgelegt ist, überschritten ist, kann das Befestigungselement 16 ausgetauscht werden. Mit der Erfindung kann daher eine sehr zuverlässige und auf am Bauwerk 12 selbst erfasste Sensordaten gestützte Aussage über einen Zustand und/oder eine Sicherheit des Bauwerks und/oder des Befestigungselements getroffen werden. Die Sensordaten werden dabei in sehr einfacher Weise durch Sensoren 26 an oder in dem Befestigungselement 16 selbst erlangt. Infolgedessen müssen keine zusätzlichen Sensoren an dem Bauwerk 12 angeordnet werden, da bei der erfindungsgemäßen Anordnung die Sensoren 26 in oder an dem Befestigungselement 16 selbst vorgesehen sind.

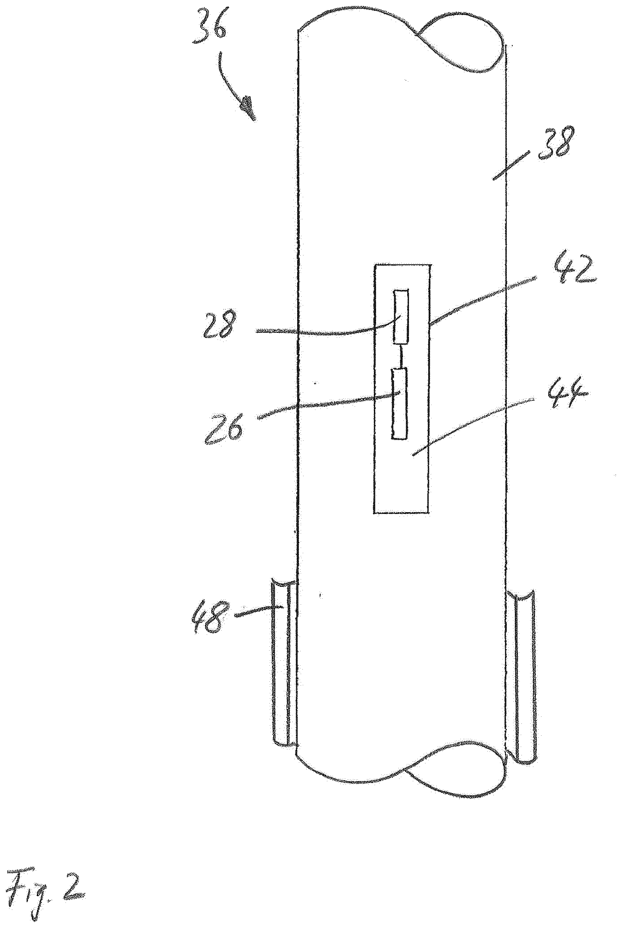

Die Darstellung der Fig. 2 zeigt schematisch und abschnittsweise ein weiteres Befestigungselement 36 für eine erfindungsgemäße Anordnung gemäß einer weiteren Ausführungsform. Das Befestigungselement 36 weist einen Bolzen 38 und einen Metalldübel 48 auf, wobei der Bolzen 38 und der Metalldübel 48 lediglich abschnittsweise und schematisch dargestellt sind. Das Befestigungselement 36 kann beispielsweise als Betonanker oder Schwerlastanker ausgebildet sein. Der Metalldübel 48 wird in einem nicht dargestellten Bohrloch eines nicht dargestellten Bauwerks verankert und kann dann mittels des Bolzens 38 gespreizt werden.

Der Bolzen 38 weist einen Schlitz 42 auf, in dem der Sensor 26 und der RFID-Chip 28 angeordnet sind. Der Sensor 26 und der RFID-Chip 28 wurden bereits anhand der Fig. 1 beschrieben und werden daher nicht erneut erläutert. Wie bereits anhand der Fig. 1 erörtert wurde, können auch mehrere Sensoren 26 zur Erfassung unterschiedlicher Parameter vorgesehen sein. Der Sensor 26 und der RFID-Chip 28 sind in ein Kunststoffmaterial 44 eingebettet, das in dem Schlitz 42 angeordnet ist. Im Rahmen der Erfindung können der Sensor 26 und der RFID-Chip 28 aber beispielsweise auch auf dem Bolzen 38, beispielsweise im Bereich einer Abflachung des ansonsten kreiszylindrischen Bolzens 38, aufgeklebt sein.

Das Befestigungselement 36 gemäß Fig. 2 kann in einer Anordnung 10 gemäß Fig. 1 anstelle oder zusätzlich zu dem dort gezeigten und beschriebenen Befestigungselement 16 eingesetzt werden.

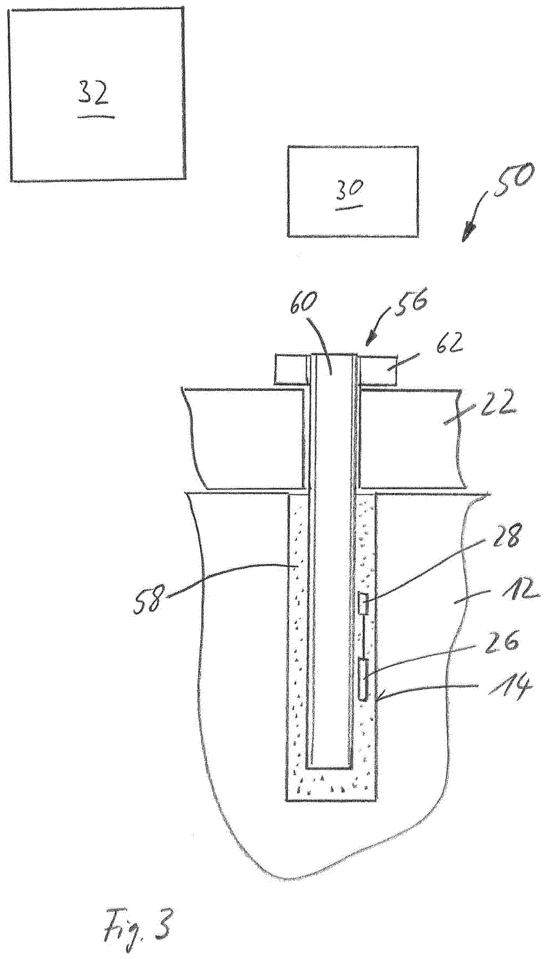

Die Darstellung der Fig. 3 zeigt schematisch und abschnittsweise eine weitere erfindungsgemäße Anordnung 50 mit einem abschnittsweise dargestellten Bauwerk 12 und einem Bohrloch 14 in dem Bauwerk 12. In das Bohrloch 14 ist ein Befestigungselement 56 eingesetzt, mit dem ein Gegenstand 22 an dem Bauwerk 12 befestigt wird. Das Lesegerät 30 und der Computer 32 sind gleich ausgebildet, wie bereits anhand der Anordnung 10 der Fig. 1 erläutert wurde, und werden daher nicht erneut beschrieben.

In dem Bohrloch 14 sind ein Sensor 26 und ein RFID-Chip 28 angeordnet, die ebenfalls in gleicher Weise ausgebildet sind, wie bereits anhand der Anordnung 10 der Fig. 1 beschrieben wurde. Auch der Sensor 26 und der RFID-Chip 28 werden daher nicht erneut erläutert.

Das Befestigungselement 56 weist einen Injektionsdübel 58 und einen Gewindebolzen 60 auf, auf den eine Mutter 62 aufgeschraubt ist. Der Gegenstand 22, der in beliebiger Weise ausgebildet sein kann und beispielsweise ein Regal oder ein Brückenlager bilden kann, ist zwischen der Mutter 62 und der Oberfläche des Bauwerks 12 eingespannt und wird dadurch an dem Bauwerk 12 gehalten.

Der Injektionsdübel 58 ist durch eine verfestigte Kunststoffmasse gebildet, die vor dem Einsetzen des Gewindebolzens 60 im fließfähigen Zustand in das Bohrloch 14 eingebracht wird. Vor, zusammen mit oder nach dem Einbringen des noch fließfähigen Kunststoffs in das Bohrloch 14 werden auch der Sensor 26 oder mehrere Sensoren 26 und der RFID-Chip 28 in das Bohrloch 14 beziehungsweise in die Kunststoffmasse eingebracht. Der Sensor 26 oder mehrere Sensoren 26 und der RFID-Chip 28 können beispielsweise an einer zylindrischen Siebhülse oder Gitterhülse befestigt sein, die vor dem Einbringen des noch fließfähigen Kunststoffs in dem Bohrloch 14 angeordnet wird. Im verfestigten Zustand des Kunststoffs, also im fertiggestellten und verfestigten Zustand des Injektionsdübels 58, sind der Sensor 26 und der RFID-Chip 28 in das verfestigte Kunststoffmaterial des Injektionsdübels 28 eingebettet.

Noch vor dem Verfestigen des Kunststoffmaterials wird der Gewindebolzen 60 in das Bohrloch 14 eingebracht, so dass dieser dann in dem Abschnitt, der im Bohrloch 14 angeordnet ist, von dem Kunststoff umgeben ist. Nach dem Verfestigen des Kunststoffs ist der Gewindebolzen 60 dadurch mittels des dann verfestigten Injektionsdübels 58 sicher in dem Bohrloch 14 des Bauwerks 12 befestigt.

Das Erfassen von Daten mittels des Sensors 26 oder mehrerer Sensoren 26, das Einlesen der Sensordaten in einen Datenspeicher des RFID-Chips 28, das Auslesen des Datenspeichers des RFID-Chips 28 mittels des Lesegeräts 30 und das Einlesen der Daten in das Datenmodell in dem Computer 32 erfolgen in der Art und Weise, wie sie bereits anhand der Anordnung 10 der Fig. 1 beschrieben wurde.

## Patentansprüche

1. Anordnung (10; 50) mit wenigstens einem Abschnitt eines Bauwerks (12) und wenigstens einem in dem Abschnitt des Bauwerks (12) angeordneten Befestigungselement (16; 36; 56), wobei ein Computer (32) und ein auf dem Computer (32) gespeichertes Datenmodell (BIM) des wenigstens einen Abschnitts des Bauwerks (12) vorgesehen sind, wobei in dem Datenmodell wenigstens Informationen betreffend eine Position des Befestigungselements (16; 36; 56) relativ zu dem wenigstens einen Abschnitt des Bauwerks (12) enthalten sind, und wobei das Befestigungselement (16; 36; 56) wenigstens einen Sensor (26) und wenigstens einen Datenspeicher aufweist, **dadurch gekennzeichnet, dass** der Datenspeicher auslesbar ist und dass Mittel vorgesehen sind, um den Datenspeicher des Befestigungselements (16; 36; 56) auszulesen und die ausgelesenen Daten in das Datenmodell des wenigstens einen Abschnitts des Bauwerks (12) einzulesen, dass das Befestigungselement (16; 36; 56) einen RFID-Chip (28) aufweist, der mittels elektromagnetischer Wellen aktivierbar und identifizierbar ist, wobei der Sensor (26) und der RFID-Chip (28) mittels elektrischer Zuleitungen miteinander verbunden sind,
dass das Befestigungselement (16; 36; 56) einen Dübel (18; 48; 58) und ein in dem Dübel (18; 48; 58) angeordnetes Befestigungsmittel, insbesondere eine Schraube (20) oder einen Bolzen (38; 60), aufweist,
- wobei der Sensor (26) und der RFID-Chip (28) in ein Kunststoffmaterial des Dübels (24; 58) zumindest abschnittsweise eingebettet sind,
- wobei der Dübel (58) wenigstens abschnittsweise mittels Einbringen von fließfähigem, verfestigbarem Kunststoffmaterial in ein Bohrloch (14) ausgebildet ist, wobei der Sensor (26) und der RFID-Chip (28) in das Bohrloch (14) eingebracht und in das Kunststoffmaterial eingebettet sind
- und/oder wobei der Sensor (26) und der RFID-Chip (28) auf das Befestigungsmittel, insbesondere eine Schraube (20) oder einen Bolzen (38; 60), aufgeklebt sind.

2. Anordnung nach Anspruch 1, wobei der Sensor (26) als Temperatursensor, Feuchtesensor, Lastwechselsensor, insbesondere mit Dehnmessstreifen und/oder mit piezoelektrischen Elementen, Längenänderungssensor, insbesondere mit Dehnmessstreifen, Kraftsensor, insbesondere mit Dehnmessstreifen, und/oder Zeitsensor ausgebildet ist.

3. Anordnung nach Anspruch 1 oder 2, **dadurch gekennzeichnet, dass** der RFID-Chip (28) ausgebildet ist, Daten aus dem auslesbaren Datenspeicher des Befestigungselements (16; 36; 56) drahtlos zu senden.

4. Anordnung nach wenigstens einem der vorstehenden Ansprüche, **dadurch gekennzeichnet, dass** in dem Datenmodell und/oder in dem Datenspeicher des Sensors (26) Informationen betreffend Abmessungen, Material, Lebensdauer, Typ, Herstelldatum, Hersteller, Chargennummer, Bemessungslast und/oder Montageart des Befestigungselements (16; 36; 56) enthalten sind.

5. Anordnung nach wenigstens einem der vorstehenden Ansprüche, **dadurch gekennzeichnet, dass** das Befestigungselement (16; 36; 56) einen elektrischen Energiespeicher aufweist, insbesondere eine Batterie.

6. Anordnung nach Anspruch 5, **dadurch gekennzeichnet, dass** der elektrische Energiespeicher im montierten Zustand des Befestigungselements (16; 36; 56) austauschbar ist.

7. Verfahren zum Bestimmen eines Zustands wenigstens eines Abschnitts eines Bauwerks und/oder eines Befestigungselements (16) mit einer Anordnung nach wenigstens einem der vorstehenden Ansprüche, mit den Schritten Auslesen der Daten aus dem Datenspeicher des Befestigungselements (16; 36; 56) und Einlesen der Daten in das Datenmodell des Abschnitts des Bauwerks (12).

8. Verfahren nach Anspruch 7, wobei nach dem Einlesen der Daten ein Zustand wenigstens des Abschnitts des Bauwerks (12) und/oder des Befestigungselements (16) festgestellt wird, wobei der Zustand eine Temperaturverteilung, eine Feuchteverteilung, eine Verteilung mechanischer Kräfte oder Spannungen und/oder eine Aufstellung vorangegangener Lastzyklen wenigstens des Abschnitts des Bauwerks (12) und/oder des Befestigungselements (16; 36; 56) enthält.

9. Verfahren nach Anspruch 7 oder 8 mit dem Schritt des Verarbeitens der Daten aus dem Datenspeicher des Befestigungselements (16; 36; 56) in Verbindung mit dem Datenmodell und Berechnen eines Belastungszustands des wenigstens Abschnitts des Bauwerks (12) und/oder des Befestigungselements (16; 36; 56).

10. Verfahren nach Anspruch 9, wobei der Belastungszustand eine noch zu erwartende Restlebensdauer des Befestigungselements (16; 36; 56) und/oder wenigstens des Abschnitts des Bauwerks (12) enthält.

## Claims

1. Assembly (10; 50) having at least one section of a structure (12) and at least one fastening element (16; 36; 56) arranged in the section of the structure (12), wherein a computer (32) and a data model (BIM) of the at least one section of the structure (12) that is stored on the computer (32) are provided, wherein at least information relating to a position of the fastening element (16; 36; 56) relative to the at least one section of the structure (12) is included in the data model, and wherein the fastening element (16; 36; 56) has at least one sensor (26) and at least one data memory, **characterized in that** the data memory can be read, and **in that** means are provided in order to read the data memory of the fastening element (16; 36; 56) and to read the data which have been read into the data model of the at least one section of the structure (12), **in that** the fastening element (16; 36; 56) has an RFID chip (28) which can be activated and identified by means of electromagnetic waves, wherein the sensor (26) and the RFID chip (28) are connected to one another by means of electrical supply lines,
**in that** the fastening element (16; 36; 56) has an anchor (18; 48; 58) and a fastening means, in particular a screw (20) or a pin (38; 60), arranged in the anchor (18; 48; 58),
- wherein the sensor (26) and the RFID chip (28) are embedded, at least in sections, in a plastic material of the anchor (24; 58),
- wherein the anchor (58) is formed, at least in sections, by introducing flowable solidifiable plastic material into a drilled hole (14), wherein the sensor (26) and the RFID chip (28) are introduced into the drilled hole (14) and are embedded in the plastic material,
- and/or wherein the sensor (26) and the RFID chip (28) are adhesively bonded to the fastening means, in particular a screw (20) or a pin (38; 60).

2. Assembly according to Claim 1, wherein the sensor (26) is in the form of a temperature sensor, a humidity sensor, a load change sensor, in particular with strain gauges and/or with piezoelectric elements, a length change sensor, in particular with strain gauges, a force sensor, in particular with strain gauges, and/or a time sensor.

3. Assembly according to Claim 1 or 2, **characterized in that** the RFID chip (28) is designed to wirelessly transmit data from the readable data memory of the fastening element (16; 36; 56).

4. Assembly according to at least one of the preceding claims, **characterized in that** information relating to dimensions, material, service life, type, date of manufacture, manufacturer, batch number, rated load and/or type of installation of the fastening element (16; 36; 56) is included in the data model and/or in the data memory of the sensor (26).

5. Assembly according to at least one of the preceding claims, **characterized in that** the fastening element (16; 36; 56) has an electrical energy store, in particular a battery.

6. Assembly according to Claim 5, **characterized in that** the electrical energy store can be replaced in the installed state of the fastening element (16; 36; 56).

7. Method for determining a state of at least one section of a structure and/or of a fastening element (16) using an assembly according to at least one of the preceding claims, having the steps of reading the data from the data memory of the fastening element (16; 36; 56) and reading the data into the data model of the section of the structure (12).

8. Method according to Claim 7, wherein, after the data have been read in, a state of at least the section of the structure (12) and/or of the fastening element (16) is determined, wherein the state includes a temperature distribution, a humidity distribution, a distribution of mechanical forces or stresses and/or a list of preceding load cycles of at least the section of the structure (12) and/or of the fastening element (16; 36; 56).

9. Method according to Claim 7 or 8, having the step of processing the data from the data memory of the fastening element (16; 36; 56) in connection with the data model and calculating a load state of the at least section of the structure (12) and/or of the fastening element (16; 36; 56).

10. Method according to Claim 9, wherein the load state contains an expected remaining service life of the fastening element (16; 36; 56) and/or at least of the section of the structure (12).

## Revendications

1. Dispositif (10 ; 50) comprenant au moins une section d'un ouvrage (12) et au moins un élément de fixation (16 ; 36 ; 56) disposé dans la section d'ouvrage (12), dans lequel il est prévu un ordinateur (32) et un modèle de données (BIM) de ladite au moins une section d'ouvrage (12) stocké sur l'ordinateur (32), le modèle de données contenant au moins des informations concernant une position de l'élément de fixation (16 ; 36 ; 56) par rapport à ladite au moins une section d'ouvrage (12), et l'élément de fixation (16 ; 36 ; 56) présentant au moins un capteur (26) et au moins une mémoire de données, **caractérisé en ce que** la mémoire de données peut être lue et **en ce qu'**il est prévu des moyens pour la lecture de la mémoire de données de l'élément de fixation (16 ; 36 ; 56) et l'introduction des données lues dans le modèle de données de ladite au moins une section d'ouvrage (12), **en ce que** l'élément de fixation (16 ; 36 ; 56) présente une puce RFID (28) qui peut être activée et identifiée au moyen d'ondes électromagnétiques, le capteur (26) et la puce RFID (28) étant reliés l'un à l'autre au moyen de conducteurs d'alimentation électriques,
**en ce que** l'élément de fixation (16 ; 36 ; 56) présente une cheville (18 ; 48 ; 58) et un moyen de fixation disposé dans la cheville (18 ; 48 ; 58), notamment une vis (20) ou un boulon (38 ; 60),
- le capteur (26) et la puce RFID (28) étant encastrés au moins par sections dans une matière plastique de la cheville (24 ; 58),
- la cheville (58) étant formée au moins par sections au moyen de l'introduction d'une matière plastique coulante et solidifiable dans un trou de perçage (14), le capteur (26) et la puce RFID (28) étant introduits dans le trou de perçage (14) et noyés dans la matière plastique
- et/ou le capteur (26) et la puce RFID (28) étant collés sur le moyen de fixation, notamment une vis (20) ou un boulon (38 ; 60).

2. Dispositif selon la revendication 1, dans lequel le capteur (26) est réalisé sous forme de capteur de température, de capteur d'humidité, de capteur de changement de charge, notamment avec des jauges de contrainte et/ou avec des éléments piézoélectriques, de capteur de variation de longueur, notamment avec des jauges de contrainte, de capteur de force, notamment avec des jauges de contrainte, et/ou de capteur de temps.

3. Dispositif selon la revendication 1 ou 2, **caractérisé en ce que** la puce RFID (28) est conçue pour transmettre sans fil des données à partir de la mémoire de données lisible de l'élément de fixation (16 ; 36 ; 56) .

4. Dispositif selon au moins l'une des revendications précédentes, **caractérisé en ce que** des informations concernant les dimensions, le matériau, la durée de vie, le type, la date de fabrication, le fabricant, le numéro de lot, la charge de référence et/ou le type de montage de l'élément de fixation (16 ; 36 ; 56) sont contenues dans le modèle de données et/ou dans la mémoire de données du capteur (26).

5. Dispositif selon au moins l'une des revendications précédentes, **caractérisé en ce que** l'élément de fixation (16 ; 36 ; 56) comporte un accumulateur d'énergie électrique, notamment une batterie.

6. Dispositif selon la revendication 5, **caractérisé en ce que** l'accumulateur d'énergie électrique peut être remplacé dans l'état monté de l'élément de fixation (16 ; 36 ; 56) .

7. Procédé pour la détermination d'un état d'au moins une section d'un ouvrage et/ou d'un élément de fixation (16) comportant un dispositif selon au moins l'une des revendications précédentes, comprenant les étapes consistant à lire les données à partir de la mémoire de données de l'élément de fixation (16 ; 36 ; 56) et à lire les données contenues dans le modèle de données de la section d'ouvrage (12).

8. Procédé selon la revendication 7, dans lequel, après la lecture des données, un état d'au moins la section d'ouvrage (12) et/ou de l'élément de fixation (16) est déterminé, l'état contenant une distribution de température, une distribution d'humidité, une distribution de forces ou de tensions mécaniques et/ou un relevé de cycles de charge précédents d'au moins la section d'ouvrage (12) et/ou de l'élément de fixation (16 ; 36 ; 56) .

9. Procédé selon la revendication 7 ou 8, comprenant l'étape consistant à traiter les données provenant de la mémoire de données de l'élément de fixation (16 ; 36 ; 56) en liaison avec le modèle de données et à calculer un état de charge de ladite au moins une section d'ouvrage (12) et/ou de l'élément de fixation (16 ; 36 ; 56).

10. Procédé selon la revendication 9, dans lequel l'état de charge contient une durée de vie résiduelle encore attendue de l'élément de fixation (16 ; 36 ; 56) et/ou au moins de la section d'ouvrage (12).
